Europäisches Patentamt

European Patent Office

Office européen des brevets

(19)

(11) Publication number: **0 456 462 A2**

(12)

# EUROPEAN PATENT APPLICATION

(21) Application number: **91304108.3**

(22) Date of filing: **07.05.91**

(51) Int. Cl.⁵: **G07G 1/00, H04B 10/10, G06K 17/00**

(30) Priority: **09.05.90 GB 9010401**

(43) Date of publication of application:
**13.11.91 Bulletin 91/46**

(84) Designated Contracting States:
**AT BE CH DE DK ES FR GB GR IT LI LU NL SE**

(71) Applicant: **Smith, Michael William**
**5 Ladywood Road**
**Hertford, Hertfordshire SG14 2TD (GB)**
Applicant: **Bennett, Derek Neville**
**384 Bury Street West**
**Edmonton, London N9 9JU (GB)**
Applicant: **CARTER THERMAL INDUSTRIES LIMITED**
**Redhill Road, Hay Mills**
**Birmingham B25 8EY, England (GB)**

(72) Inventor: **Smith, Michael William**
**5 Ladywood Road**
**Hertford, Hertfordshire SG14 2TD (GB)**

(74) Representative: **Bridge-Butler, Alan James et al**
**G.F. REDFERN & CO. Marlborough Lodge 14 Farncombe Road**
**Worthing West Sussex BN11 2BT (GB)**

(54) **Electronic display device, display setting apparatus and display system.**

(57)    There is described an information display system for use in a building comprising a central controller, a plurality of individual display devices, and a control circuit linked to the building's lighting system and capable of modulating the light level in the building in accordance with signals from the central controller to broadcast a coded signal having an address component and a data component, each display device having means to receive the coded signal and means acting in dependance on the address component, to set the display to show selected information in dependence on the data component.

EP 0 456 462 A2

LIGHT SWITCH

MAINS IN

LIGHT   LIGHT   LIGHT

STORE LIGHTS CONTROLLER

LS

DATA LINK TO PROGRAMMING DEVICE.

MANUAL INPUT

*Fig 6.*

PRODUCT

PRODUCT

PDD

17

PD

PD

17

This invention relates to an electronic price display system, a display device and a display setting apparatus for use with the display system.

There is a problem with pricing displays in large retail outlets in keeping track with rapidly changing financial conditions. These changes are either forced by the volatile nature of the national economy or more likely are due to market forces and an effort to maintain a competitive advantage.

In a store with many thousands of items it has proved increasingly difficult accurately to maintain the price-to-product relationship.

Various proposals have been made for providing price display systems for retail outlets which utilise the central computer of the store's inventory and pricing control to address individual price display devices so that price data displayed thereon corresponds to the price charged for a particular item at the point of sale. US Patent 4,002,886 describes one such system, wherein data is transmitted to each price display unit from a central computer via a hard-wired data link.

According to a first aspect, the present invention provides an information display system comprising a central controller, a plurality of individual display devices, and a control circuit linked to the building's lighting system and capable of modulating the light level in the building in accordance with signals from the central controller to broadcast a coded signal having an address component and a data component, each display device having means to receive the coded signal and means acting in dependance on the address component, to set the display to show selected information in dependence on the data component.

While the modulation of the lights is described herein as 'dimming', it is envisaged that the 'dim' state may be used as a normal state, and the modulation effected by a momentary brightening of the light. While primarily intended for indoor use, it is foreseen that the system may be used outdoors if ambient conditions permit.

Since each display device must be assigned a unique address for comparison with the address components of coded signals to determine whether a coded signal is intended for particular price display device, a second aspect of the invention provides a programming device for setting a display device of the type described, said programming device having means for transmitting in a selected direction a coded radiation signal having an address component in order to set an address code in the display device.

Said programming device is preferably portable, and may also include means for incorporating a display data component in the radiation signal.

Preferably, the system comprises a plurality of display devices having different respective addresses which said apparatus is arranged to use in turn in a cyclical manner to produce said address components respectively in conjunction with pre-selected display data components whereby the display devices are set in a predetermined sequence.

In one embodiment the display devices are arranged to display prices associated with Bar Codes which are respectively associated with the different goods being priced. Thus the Bar Codes can be used as the bases for the address components of the radiation signal provided by said control circuit or programming device.

For an electronic means of displaying information, a power source is required and if this source should be contained in the display, such a device would benefit from being easily portable. Also, low or zero maintenance would seem to be of special advantage. To satisfy these requirements it is proposed to employ a photo-voltaic cell as the power source since this will provide the required attributes. Since light signalling is used, the photo-voltaic cell may provide both the power for driving the device and the function of light signal sensing.

The display device may be programmed with the appropriate address in any one of a number of ways, for example by the use of an array of miniature (DIP) switches. However, another, possibly more convenient method for use with price displays would be to provide a programming device which reads the Bar Code of the product in question and uses this information to generate an address code which is programmed into the display unit. The preferred embodiment uses a modulated light source to feed this information into the photo-cell of the price display device. Such a programming device is preferably made portable for ease of use, and its information light signal will be coded so that the price display device can differentiate between it and a price update information signal which may be broadcast by the store lighting arrangement. The advantages of this method are that human error is almost entirely eliminated and that the price display devices are very easily reprogrammed with new addresses if need be. The programming device could also be employed to give initial (or even updating) pricing data to the display device.

In one embodiment of the control circuit, the usual switching circuits for a store lighting system are overridden by an electronic power switch capable of interrupting the lighting load current for short periods and in multiples of half cycles of the mains frequency. By ensuring that switching occurs only at the zero crossing points of the mains current, unwelcome electromagnetic interference would be reduced to a minimum.

Although such a method would provide a relatively low speed signalling path (about 20 baud for normal fluorescent sources) the actual number of updates required in any one period will be a fraction of the total number of items held by the store. An update rate of about 900 items per hour is envisaged which should prove more than adequate for any practical application.

The power switch may be linked to a central controller which would derive its data either by input from a human operator or more likely by a direct computer link with central data bases, this being a more effective way of reducing sources of human error.

Of course, relatively low frequency flickering of store lights is likely to prove disturbing to personnel and customers, so that this means of updating might be usable only after business hours. If it were imperative that a price be changed during business hours, then this could be done semi-automatically by use of the programming device if it were decided that a short period of low-frequency light flicker were unacceptable.

In an advantageous development of the system, only part of the instore lighting is controlled by the central controller, in that it has been found that by using a modulator to control only one fluorescent tube in a multi-tube ceiling fitment, effective data transmission may be achieved with less intrusive flickering of the store lighting.

In order to facilitate installation of the system, it is envisaged that a slave controller capable of modulating a fluorescent tube can be arranged to replace the usual 'starter' device of the fluorescent tube. The slave controller will be arranged so that it can short-circuit the tube through a resistor of an appropriate value to ensure a dimming rather than a complete extinguishing of the tube. The slave controller may be controlled either by being hard-wired to the central controller, or may be linked thereto by an electromagnetic (radio or IR or visible light) link, or may be controlled by the central controller via mains-borne signalling techniques. In this last embodiment, the slave controller will simply replace the fluorescent tube 'starter' and signals to control the slave controller will be sent along the same conductors as provide the power for the fluorescent tube.

In order to provide a reverse channel to transmit information from the display device to the central controller, the display device may be provided with an audio sounder, preferably operable in the audible and in the ultrasonic range. By also providing microphones in the slave controllers housed in the ceiling fitments, a communication channel may be established, so that individual display devices could provide signals acknowledging receipt of messages.

In a further refinement, preferably during installation of the system, the central controller could be arranged to poll all the microphones to determine which received the best sound signal from a particular price display device in terms of strength and clarity. In subsequent exchanges with that particular price display device, the central controller would then utilise the most appropriate microphone to detect the acknowledgement signal.

The audio sounder may also be operated in the audible range to attract attention of staff when the display device detects an error in the data component of a coded signal addressed to it, or the audio sounder could be actuated by the data component of a coded signal to attract the attention of shoppers to a 'special offer' item.

To cause minimum disruption to existing shelving and product display systems, the price display device would be designed to fit within a typical shelf edge ticket display rail, but its application is not limited to this and it could be of such dimensions, due to electronic miniaturisation, that stand alone applications could be accommodated.

The display area could have digits about 12mm high with a fixed decimal point. Any other semi-permanent 'per quantity' displays (such as 'per foot' or 'per lb' etc) could be provided by means of printed inserts into a suitable part of the display device casing.

Taking these comments into consideration, a price display device having dimensions of about 25 x 100 x 10 mm is envisaged.

The programming device could be a hand-held portable device about the same size as a conventional TV remote control unit.

Embodiments of this invention will now be described, by way of example, with reference to the accompanying drawings in which:-

Figure 1 is a block circuit diagram of a price display device embodying this invention;

Figure 2 is waveform diagram illustrating the operation of the device shown in Figure 1;

Figure 3 is a block circuit diagram of apparatus embodying this invention and for transmitting data to the device shown in Figure 1;

Figure 4 is a block circuit diagram of a programming device embodying this invention and for initially setting the device shown in Figure 1;

Figure 5 is a set of waveform diagrams illustrating the operation of the display system; and

Figure 6 is a part-schematic perspective view of a display system embodying this invention.

For the sake of the description given below, it will be assumed that each numeric digit of the display is represented by four binary digits (bits). To code the decimal range only the first ten of the sixteen possible patterns of four bits are necessary. However, some of the remaining codes are given special significance in this system. One code is used to designate the end of a message, another designates that the message carries an address and a price and the last designates that the message carries only an address. Therefore a complete message consists of a message-type designator followed by the message content followed by an end-of-message designator.

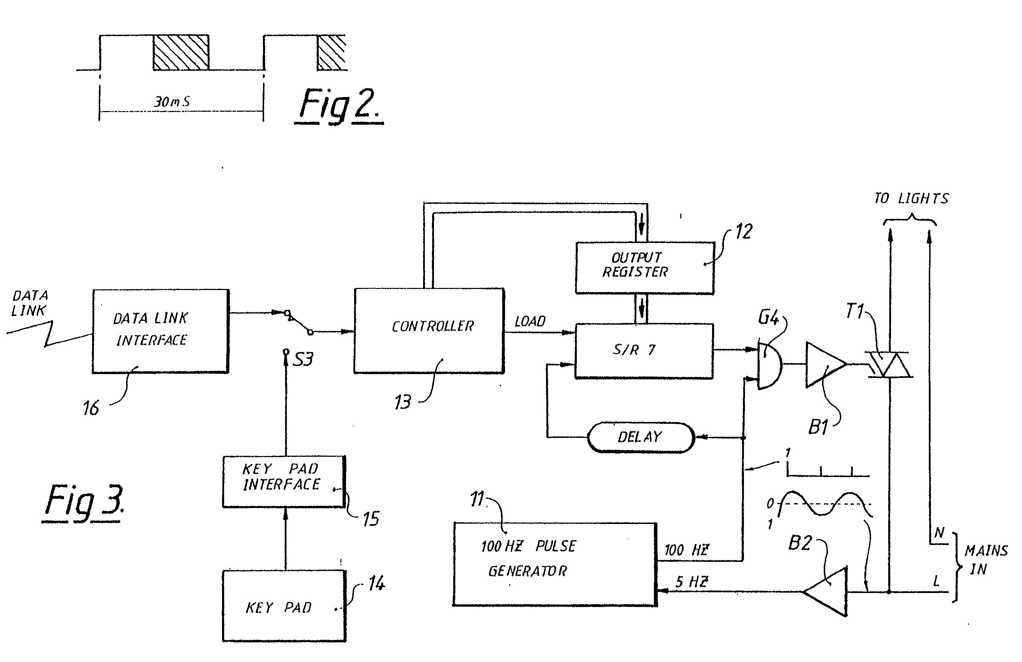

In one type of signalling arrangement a binary digit is represented as shown in Figure 2. In this a data bit cell is divided into three time slots. The first slot is always high, the middle time slot is high or low depending on the data content, and the last time slot is always low. The advantage of this arrangement is that the data becomes self clocking because the data bit boundaries are always the same.

Assuming that a high signal is equivalent to the lights being on and low to the lights being off, it is clear how a data channel can be formed using the lighting arrangement.

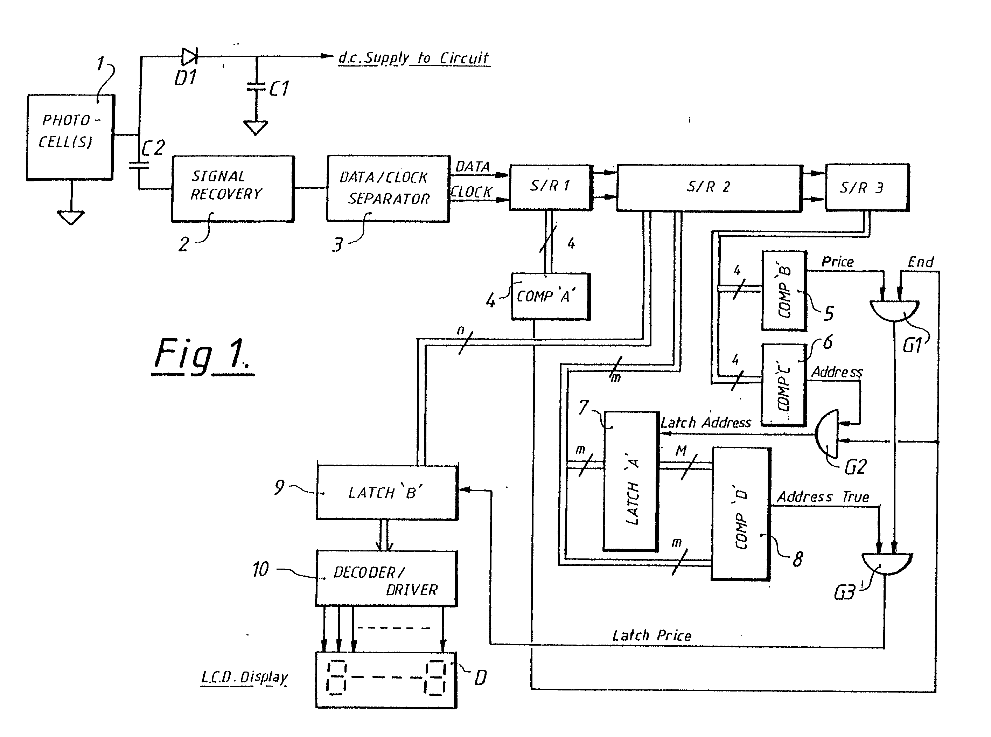

The basic elements of the price display device shown in Figure 1 are:

1. Photo-voltaic cells and associated power supply circuitry to provide power and signal sensing.

2. A low power 'seven segment' numeric display element.

3. Signal processing electronic circuitry.

The description below relates to a possible implementation of the circuitry in terms of functional components. In a practical implementation a custom microprocessor may be employed to provide most of the functions, since the capability to manipulate the data and test for errors would be required. Methods of error detection and correction are well documented elsewhere and will not be described.

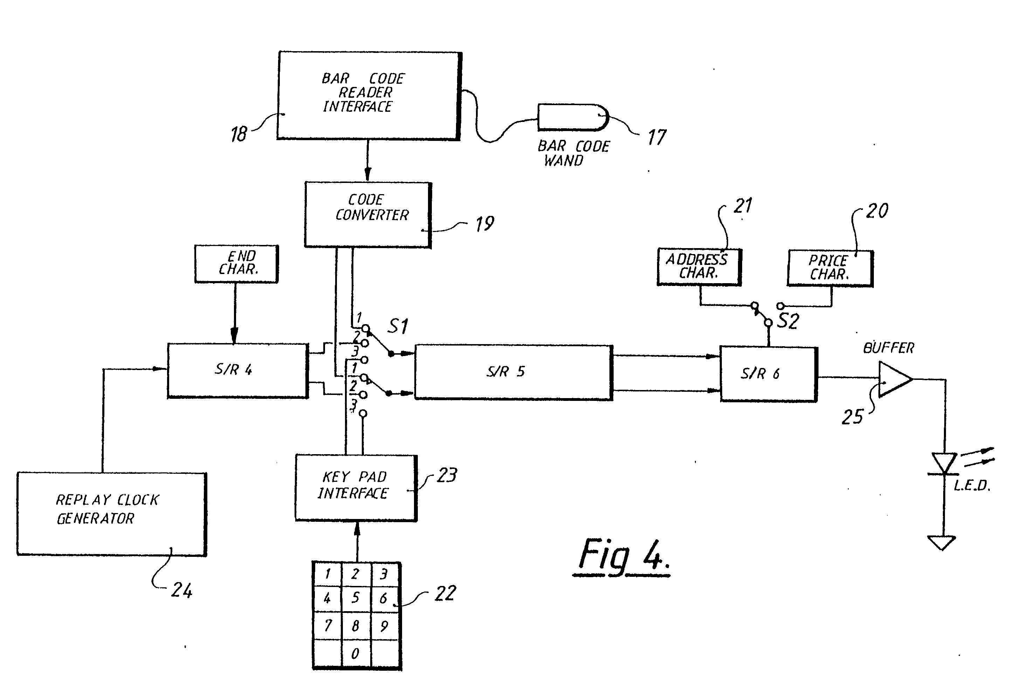

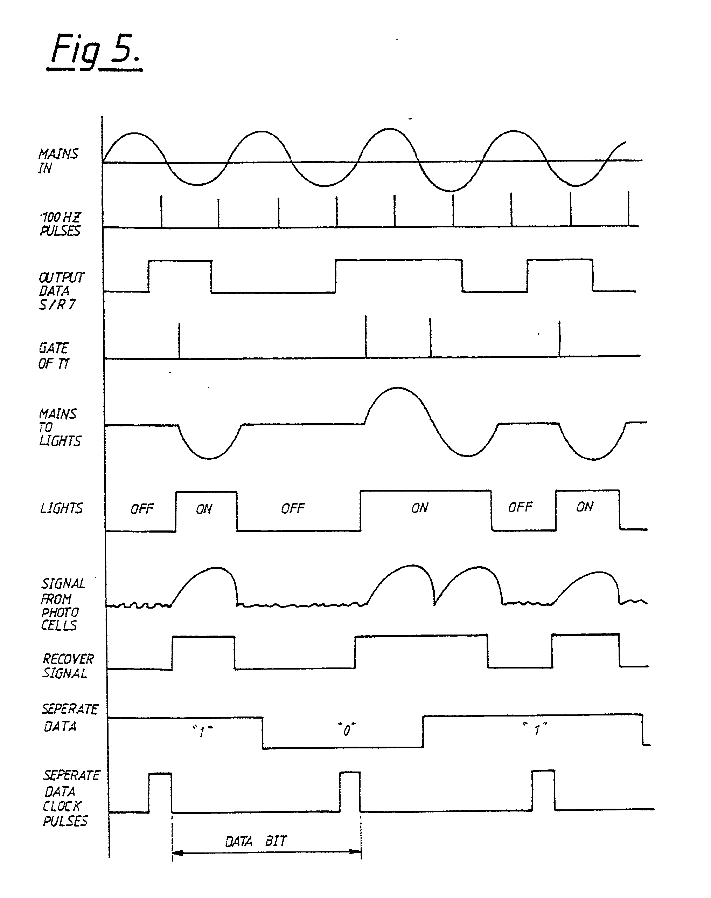

Figure 1 shows a block diagram of the price display device. A photo-cell in the form of a photo-voltaic cell 1 charges capacitor C1 via diode D1 to provide power for the rest of the device, the diode D1 serving to rectify any alternating components in the photo-cell's output. Capacitor C2 couples the alternating components of the photo-cell output to a signal recovery circuit 2 which amplifies it and conditions it as shown in Figure 5 into a form that can be used in the following circuits - see Figure 4.

A data clock separator 3 converts the '1 of 3' signal into two signals representing the data content in Non Return-to-Zero form i.e. the signal level represents binary 1 or 0 with a clock transition for every data bit. This enables the data to be shifted into the serial-in/parallel-out shift registers S/R1 to S/R3. Comparator 4 compares the last four bits with a predetermined end-of-message designator and when identity is established raises a signal called 'END'. The message-type designator is detected by comparators 5 and 6 which raise respective signals 'PRICE' or 'ADDRESS' accordingly.

When the signals 'ADDRESS' and 'END' occur, AND-gate G2 provides output signal 'LATCH ADDRESS' which causes address latch 7 to store address data bit field 'm' and the display device becomes programmed with a valid address represented by address field 'M' output from latch 7.

When, during some later message sequence, signals 'PRICE' and 'END' occur together, AND-gate G1 provides an output signal which is further gated via AND-gate G3 with signal 'ADDRESS TRUE'. The latter signal is present if the content of address field 'M', stored in latch 7, is found in comparator 8 to match the address data bit field 'm' in the captured message. If the output of AND-gate G1 coincides with 'ADDRESS TRUE' the output 'LATCH PRICE' is emitted from AND-gate G3 and data bit field 'n', representing a new price, is stored into latch 9. The contents of latch 9 are passed to a decoder/driver circuit 10 which converts the four hit representation of digits into a seven segment code suitable for driving LCD display D.

Referring to Figure 3, the object of this control circuit is to interrupt current to lighting circuits in such a way that information can be transferred to display devices via the lights of a store lighting arrangement to which the photo-cells of the display devices 1 are exposed.

A triac T1 is used to provide the electronic switching that is necessary. (A triac conducts current in both directions but only when triggered to do so by a trigger signal applied to its gate terminal. Conduction stops when the current falls to zero so that to conduct a.c. a trigger pulse is required at the beginning of each half cycle).

The triac gate pulses are buffered from the low voltage circuitry of the device by buffer circuit B1. This is normal practice to provide adequate safety isolation from the mains voltage. Buffer B2 provides similar isolation for a timing generator 11 which provides 100Hz pulses locked to the mains frequency. These pulses are used to 'fire' the triac T1 through AND-gate G4 but are conditioned by the other input of AND-gate G4 which is connected to the output of a parallel-in/serial-out shift register S/R7.

The contents of S/R7 are loaded from an output register 12 which has the required light interruption pattern stored in it by a controller 13. Note that the pattern is not in accordance with the binary coded information bits but with the '1 of 3' coded form of the binary information. It is one of the tasks of the controller to provide the required conversion for this.

The contents of the shift register are clocked out serially to AND-gate G4 by a delayed form of the 100Hz pulses so that there is no possibility of overlap timing errors occurring. (See Figure 5).

The controller 13 provides the interface to accept data from two possible sources, either a manual input source in the form of a built-in keyboard 14 and interface 15, or an external source provided by a direct link interface 16 to an appropriate data base.

Referring to Figure 4, the programming device has two major elements one of which, a bar code reader wand 17 and interface 18, is likely to be a proprietary sub-system. As such its internal workings will not be described. However, such a device typically provides an electronic representation of a scanned bar code as a serial data stream.

A code converter 19 changes the bar code information into '1 of 3' code which, when switch S1 is in position 1, is serially loaded into shift register S/R5.

Shift registers S/R4 and S/R6 are pre-loade with the END character and the PRICE or ADDRESS designator character from respective stores 20,21 depending on the position of switch S2. Alternatively if switch S1 is in position 3, then S/R5 is loaded with data input from a keyboard comprising keypad 22 and interface 23. It is to be noted that all the shift registers are loaded with the '1 of 3' representation of the required data.

When all the shift registers are loaded switch S1 is switched to position 2 and replay clock generator 24 is started. This causes the contents of the shift registers to be output via a buffer 25 to a light emitting diode (LED) which can be pointed at the price display device to be programmed.

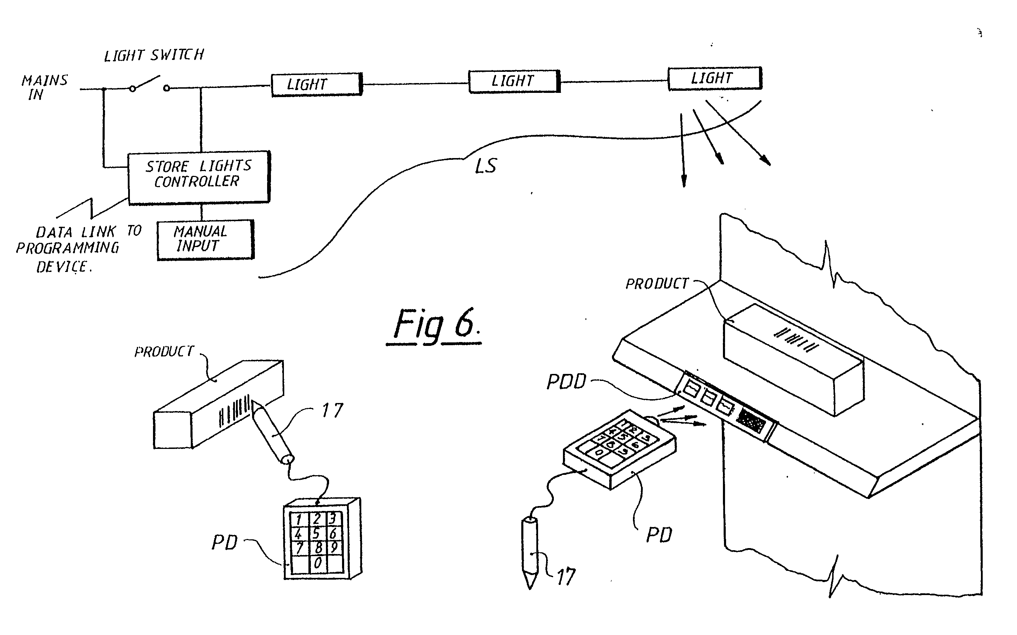

The use of the programming device in the overall display system is illustrated in Figure 6.

A price display device PDD (Figure 1) has an electronic display and a light signal sensor which also acts as a power source. Modulation of the light emitted by an in-store lighting system LS (Figure 3) serves to produce a broadcast light signal comprising an address component serving to trigger a selected price display device and a data component providing price data. A portable programming device PD (Figure 4) enables data loaded manually (or loaded from a central database - see below) to be directionally transmitted to the price display device using light signals. Use of the product bar codes to form the basis of addresses, and reading of the bar codes by the programming device, provides automatic data retrieval from the store in the programming device for respective product price display devices. By converting the twelve decimal. Digits of the product bar code into an internal address code of five hexadecimal digits, the volume of date to be transmitted in reduced. This conversion also prevents outsiders from using the system to obtain price information, since the correlation between price update information and the nature of the product cannot be ascertained directly from the broadcast updating signals.

In an alternative form the programming device may be connected temporarily to so as to be loaded with data from a terminal connected to a central database. The data would then comprise both address component and data component. Such data loading may be done using a ROM cartridge.

Thus the system provides the following features:
1. Transfer of an address to a price display device using the bar code as the basis for an address;
2. Manual programming of the display price or address into a price display device.

Although the light signalling described above is at relatively low switching frequencies, higher switching frequencies or invisible light sources may be employed in appropriate circumstances so that price updating can take place while customers and staff are present. For example, the ceiling fitments of the store may have one or more of their fluorescent tubes replaced by UV tubes controlled by power switches, to provide flicker-free lighting from the remaining tubes and high speed data transmission from the UV tubes.

In an alternative arrangment, a ceiling fitment including one or more tubes fitted with 'electronic ballasts' can be modified to provide a high frequency data transmission channel, since the electronic ballast first rectifies the mains voltage and an inverter then provides a high frequency current to run the fluorescent tube or tubes. By modifying the electronic ballast to include controllable switching of the high-frequency current, a higher frequency modulation of the light output is achievable than can be achieved by using the mains frequency, and thus higher data transmission rates are possible.

The above description refers to price display updating, but clearly the system can be adapted for transmission and display of any type of information.

## Claims

1. An information display system comprising a central controller, a plurality of individual display devices, and a control circuit linked to the building's lighting system and capable of modulating the light level in the building in accordance with signals from the central controller to broadcast a coded signal having an address component and a data component, each display device having means to receive the coded signal and means acting in dependance on the address component, to set the display to show selected information in dependence on the data component.

2. A system according to Claim 1, further including at least one programming device for initially setting the display devices, said programming device having means for transmitting in a selected direction a coded radiation signal having an address component in order to set an address code in the display device.

3. A system according to Claim 2, wherein the programming device or devices further include means for incorporating a display data component in their radiation signal.

4. A system according to Claim 1 and comprising a plurality of display devices having different respective addresses which said control circuit is arranged to use in turn in a cyclical manner to produce said address components respectively in conjunction with pre-selected display data components whereby the display devices are set in a predetermined sequence.

5. A system according to any one of Claims 1 to 4, wherein the display devices are arranged to display prices associated with Bar Codes which are respectively associated with the different goods being priced, the Bar Codes being used as the bases for the address components of the radiation signal provided by said control circuit or programming device.

6. A system according to Claim 1, wherein a respective photo-voltaic cell is used as the power source for each display device.

7. A system according to Claim 6, wherein the photo-voltaic cell also provides the function of light signal sensing in the display device.

8. A system according to Claim 1, wherein the control circuit comprises a plurality of slave controllers each modulating one or more light sources in a lighting fitment of a lighting array.

9. A system according to Claim 8, wherein each slave controller is linked to the central controller by a data link.

10. A system according to Claim 9, wherein the data link is effected via a hard-wired system.

11. A system according to Claim 10, wherein the central controller controls the slave controllers by means of mains-borne signalling.

12. A system according to Claim 9, wherein the data link is effected via a radio frequency or infra red or ultrasonic or other radiation signal.

13. A system according to any of Claims 8 to 12, wherein not all of the light sources are controlled by the control circuit.

14. A system according to Claim 13, wherein the lighting arrangement comprises a plurality of lighting fitments each housing a plurality of light sources, and selected ones of said sources in selected ones of said fitments are modulated by said control circuit.

15. A system according to any preceding Claim, wherein each display device includes an audio sounder capable of emitting audible or ultrasonic sound as coded signals.

16. A system according to Claim 15, wherein microphones are provided to receive sound emitted from the display devices and to provide output signals to the central controller in response to such coded signals.

17. A system according to Claim 15, wherein the audio sounder may be caused to emit audible sound in response to the data component of the broadcast coded signal.

_Fig 1._

_Fig 2._

_Fig 3._

TO LIGHTS

MAINS IN

N

L

T1

B1

B2

G4

12

OUTPUT REGISTER

S/R 7

DELAY

CONTROLLER

13

LOAD

S3

100 HZ

5 HZ

11

100 HZ PULSE GENERATOR

15

KEY PAD INTERFACE

14

KEY PAD

16

DATA LINK INTERFACE

9

DATA LINK

30 mS

*Fig 4.*

# Fig 5.

MAINS IN

·100 HZ PULSES

OUTPUT DATA S/R 7

GATE OF T1

MAINS TO LIGHTS

LIGHTS

OFF   ON   OFF   ON   OFF   ON

SIGNAL FROM PHOTO CELLS

RECOVER SIGNAL

SEPERATE DATA

"1"   "0"   "1"

SEPERATE DATA CLOCK PULSES

DATA BIT

Fig 6.